# EUROPEAN PATENT APPLICATION

(11) **EP 4 835 702 A1**
(43) Date of publication of application: **04.11.2026**
(21) Application number: 26174741.4
(22) Date of filing: 27.04.2026
(51) Int. Cl.: G06F 21/55, G06F 21/10, G06N 20/00

(54) **AUTOMATICALLY ROUTING INCIDENT TICKETS**

(30) Priority: 28.04.2025 US 202519191256
(71) Applicant: Microsoft Technology Licensing, LLC, Redmond, Washington 98052-6399 (US)
(72) Inventor: GUPTA, Rachita, Redmond, 98052-6399 (US); KESSLER, Nicholas, Redmond, 98052-6399 (US); ASOK, Abhijith, Redmond, 98052-6399 (US); NAG, Amitabh, Redmond, 98052-6399 (US); MADSEN, Annie, Redmond, 98052-6399 (US); LIN, Zhenfeng, Redmond, 98052-6399 (US); WILLIAMS, Candace, Redmond, 98052-6399 (US); BOURLIER, Jennifer, Redmond, 98052-6399 (US); CURLETTE, Christina, Redmond, 98052-6399 (US); CROSS, Drew, Redmond, 98052-6399 (US); MOORE, Josh, Redmond, 98052-6399 (US)
(74) Representative: Murgitroyd & Company

(57) **Abstract**

Methods, apparatuses, and products for automatically routing incident tickets, including: receiving an incident ticket describing an event in a computing system; calculating a plurality of routing signals for the incident ticket, wherein calculating the plurality of routing signals comprises: calculating, based on a plurality of user-defined rule sets applied to the incident ticket, one or more rule-based signals of the plurality of routing signals; calculating, based on one or more machine learning models sets applied to the incident ticket, one or more model-based signals of the plurality of routing signals; and performing a routing decision for the incident ticket based on the plurality of routing signals.

## Description

### BACKGROUND

Incident tickets are used as records of incidents that occur in a computing system and may require remediation. As incident tickets are received, they are routed to some user or group so that the incident ticket can be reviewed, triaged, and resolved. However, some incident tickets may be misrouted to the incorrect recipient.

Misrouting an incident ticket can result in various negative consequences. For example, the incorrect recipient may attempt to remediate an issue described by an incident ticket, which may require more time than a correct recipient with more expertise in the problem area. As another example, the incorrect recipient may spend significant amounts of time determining who should have received the incident ticket and rerouting it to the correct recipient. This may delay the amount of time required to remediate the incident, thereby prolonging any negative performance impacts caused by the incident.

Some existing implementations may attempt to identify and reroute misrouted incident tickets. For example, certain ticket recipients may have automatic workflows or rule sets that can be applied to received incident tickets to identify any misrouted incident tickets. However, the workflows or rule sets for a specific ticket recipient are only applied after that ticket recipient has been initially assigned the incident ticket, ignoring recipient-specific rule sets or workflows for other potential recipients.

### SUMMARY

The scope of the invention is in accordance with the appended claims. According to embodiments of the present disclosure, various methods, apparatus, and products for automatically routing incident tickets are described herein. In some aspects, automatically routing incident tickets includes: receiving an incident ticket describing an event in a computing system; calculating a plurality of routing signals for the incident ticket, wherein calculating the plurality of routing signals comprises: calculating, based on a plurality of user-defined rule sets applied to the incident ticket, one or more rule-based signals of the plurality of routing signals; calculating, based on one or more machine learning models sets applied to the incident ticket, one or more model-based signals of the plurality of routing signals; and performing a routing decision for the incident ticket based on the plurality of routing signals. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a diagram of an example computing environment for automatically routing incident tickets in accordance with some embodiments.
Fig. 2 sets forth a flow chart illustrating an example method of automatically routing incident tickets in accordance with some embodiments.
Fig. 3 sets forth a flow chart illustrating an additional example method of automatically routing incident tickets in accordance with some embodiments.
Fig. 4 sets forth a flow chart illustrating an additional example method of automatically routing incident tickets in accordance with some embodiments.
Fig. 5 sets forth a flow chart illustrating an additional example method of automatically routing incident tickets in accordance with some embodiments.
Fig. 6 sets forth a flow chart illustrating an additional example method of automatically routing incident tickets in accordance with some embodiments.
Fig. 7 sets forth a flow chart illustrating an additional example method of automatically routing incident tickets in accordance with some embodiments.
Fig. 8 sets forth a flow chart illustrating an additional example method of automatically routing incident tickets in accordance with some embodiments.
Fig. 9 illustrates an exemplary computing device that may be specifically configured to perform one or more of the processes described in the present disclosure.
Fig. 10 sets forth a block diagram of a cloud service provider service architecture in accordance with some embodiments of the present disclosure.

### DESCRIPTION OF EMBODIMENTS

Incident tickets are used as records of incidents that occur in a computing system and may require remediation. Typically, these incident tickets are routed to a team or individual for triaging and resolving the subject incident. However, incident tickets are sometimes routed to the teams or individuals less equipped to efficiently resolve the incident. For example, in some incident management systems, the creator of an incident ticket may select a team that should receive the ticket or a classification for the ticket that corresponds to some team that will receive the ticket. The ticket will then be routed to this team by adding the ticket to a queue of incident tickets for that team.

Misrouting an incident ticket can result in various negative consequences. For example, members of a team receiving an incorrectly routed incident ticket may spend significant amounts of time trying to remediate a high severity ticket outside their area of expertise or to determine which team should have received the incident ticket so that it may be rerouted. This can cause delays, particularly for high-severity incidents, as the receiving team may lack the expertise to address the problem, thereby prolonging the amount of time that the incident affects the computing system. This may result in negative user experiences and potential prolonged performance degradation.

To address these shortcomings, the approaches set forth herein provide automatic routing for incident tickets using combinations of both rule-based signals and machine learning-based signals. Each team may define a set of rules that identify conditions under which the team should or should not receive specific types of incident tickets. The rule sets for all teams may be applied to an incoming incident ticket to produce one or more rule-based signals. Machine learning models may also be used to analyze metadata and other attributes of the incident ticket to identify similar historical incidents. These similar historical incident tickets may be used to generate one or more model-based signals. A decision engine may prioritize these signals and select a routing action when one of the signals exceeds a predefined confidence threshold.

Embodiments described herein can improve the accuracy and efficiency of incident routing by automating a task that would otherwise require manual triage. In doing so, embodiments can reduce delays in remediation, accelerate system recovery times, and limit the burden placed on support teams. Embodiments may be designed to scale across distributed systems where individual incidents may affect large numbers of machines, and signal evaluation may be terminated early when sufficient confidence is reached, reducing unnecessary computation. Additionally, embodiments can include safeguards that suppress automated routing when confidence thresholds are not met, thereby enhancing reliability. These improvements contribute to the overall performance, scalability, and robustness of the monitored system.

Management of incident tickets is essential in maintaining system performance. Misrouting an incident ticket to the incorrect team may delay remediation of the associated incident. This may negatively impact performance and harm user satisfaction. The approaches set forth herein use combinations of human-defined rules and artificial intelligence to route incident tickets, improving the likelihood that an incoming incident ticket is routed to the correct team.

Implementing this automated incident routing system can provide significant operational and competitive advantages for cloud service providers and other organizations managing large-scale distributed systems. By reducing the time required to assign incidents and by assigning incidents to resources able to more efficiently resolve incidents, the system helps improve service availability, minimize downtime, and enhance customer satisfaction. Faster incident resolution can lead to improved service-level agreement (SLA) compliance, reducing penalties and strengthening trust with enterprise customers. The automation of routing decisions also allows incident resolution resources to focus on higher-value tasks rather than await a manual incident assignment to an individual, team, or workgroup, increasing resource efficiency. Additionally, by accurately identifying and suppressing non-actionable or spam incidents, the system can reduce alert fatigue and improve the signal-to-noise ratio in operational workflows, thereby reducing the overall amount of traffic and transactions through the system. These improvements collectively support more reliable infrastructure operations and serve a highly responsive cloud platform and intelligent incident management capabilities.

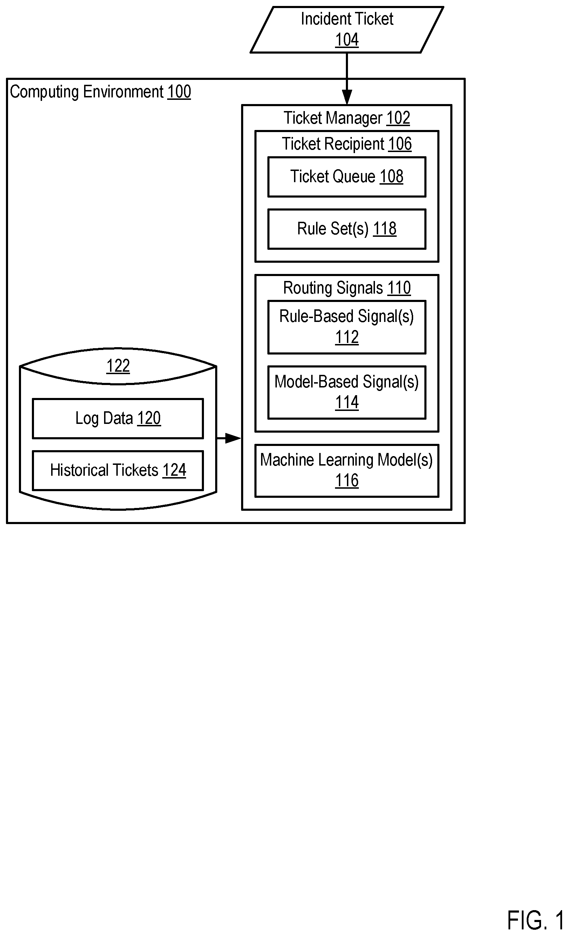

Fig. 1 sets forth a diagram of an example computing environment 100 for automatically routing incident tickets in accordance with some embodiments of the present disclosure. The example computing environment 100 includes a ticket manager 102. The ticket manager 102 is a process, service, and/or application executed in the computing environment 100 that manages the routing of incident tickets 104. As described herein, an incident ticket 104 is a record of an event to be analyzed that may require additional action(s) to be performed by an actor. For example, an incident ticket 104 may record an event that occurs in a computing system (e.g., one or more computing devices). Examples of actions to be performed for an incident ticket 104 may include triaging, investigating the underlying event, mitigating or otherwise resolving the underlying event, and the like. Accordingly, the incident ticket 104 may be used to track information related to the event and any actions performed in relation to the event.

The incident ticket 104 may include various types of information depending on the particular fields of the incident ticket 104, the entity that generated and submitted the incident ticket 104, and/or design or engineering considerations. For example, the incident ticket 104 may include identifying information for the entity that generated and submitted the incident ticket 104 such as machine identifiers, account identifiers, and the like. As another example, the incident ticket 104 may include identifying information for computing devices, users, system components, and the like affected by the underlying event described by the incident ticket 104. As a further example, the incident ticket 104 may include descriptive information such as a title, a description body, a severity level, attachments such as screenshots, logging or debug information, error codes, or any other information as can be appreciated.

In some embodiments, the incident ticket 104 may be submitted to the ticket manager 102 by a user. For example, in some embodiments, a user may access an interface (e.g., a graphical user interface (GUI), a command line interface (CLI), an application programming interface (API), and the like) for encoding and submitting an incident ticket 104. In some embodiments, the incident ticket 104 may be generated by a process or service in the computing system that experienced the associated event or a process or service monitoring the computing system that experienced the associated event. This process or service may then submit the incident ticket 104 to the ticket manager 102.

As is set forth above, an incident ticket 104 is a record of some event that may require additional actions by some actor (e.g., a user or a group of users). Accordingly, in some embodiments, the incident ticket 104 manages received incident tickets 104 by routing incident tickets 104 to a ticket recipient 106. A ticket recipient 106 is an entity, such as a user, a team or group of users, and the like, to which an incident ticket 104 is assigned for further action (e.g., triaging, investigation, resolution, and the like). Routing an incident ticket 104 to a ticket recipient 106 causes the incident ticket 104 to be assigned to that ticket recipient 106.

In some embodiments, each ticket recipient 106 may have or be assigned their own ticket queue 108. A ticket queue 108 is a data structure for storing incident tickets 104 assigned to the ticket recipient 106 due to being routed to the ticket recipient 106 by the ticket manager 102. Although the ticket queue 108 is described as a queue, readers will appreciate that other types of data structures may also be used. In some embodiments, the ticket queue 108 stores a particular subset or type of incident tickets 104 assigned to the ticket recipient 106. For example, in some embodiments, the ticket queue 108 may store those incident tickets 104 that have yet to be triaged, resolved, closed, or subject to some other action.

In some embodiments, the incident ticket 104 as received by the ticket manager 102 will include an identifier of a particular ticket recipient 106. For example, in some embodiments, the incident ticket 104 may include a field for inputting a particular ticket recipient 106. As another example, in some embodiments, the incident ticket 104 may include a field for inputting a classification for the incident ticket 104, with incident tickets 104 of particular classifications being assigned to particular ticket recipients 106. In some embodiments, the interface for creating an incident ticket 104 may allow for these fields to be populated by a creator of the incident ticket 104.

In some embodiments where a received incident ticket 104 identifies a particular ticket recipient 106 the incident ticket 104 may be added to the ticket queue 108 of the ticket recipient 106. As will be described in further detail below, the ticket manager 102 may route this incident ticket 104 by determining whether the incident ticket 104 should be rerouted and added to a ticket queue 108 of a different ticket recipient 106. In some embodiments, a received incident ticket 104 may be routed as described below without first being added to the ticket queue 108 of a ticket recipient 106.

The ticket manager 102 determines how to route a received incident ticket 104 using multiple routing signals 110. A routing signal 110 is one or more data points used by the ticket manager 102 in determining how to route an incident ticket 104. Particularly, in some embodiments, the ticket manager 102 uses a combination of rule-based signals 112 and model-based signals 114 in determining how to route an incident ticket 104. Rule-based signals 112 are routing signals 110 calculated or generated by applying one or more rules to some data. Model-based signals 114 are routing signals 110 calculated or generated using one or more machine learning models 116. For example, a machine learning model 116 may be used to aggregate or select the data used in calculating a model-based signal 114 and/or to calculate or generate the model-based signal 114 itself. A machine learning model 116 may include any type of machine learning model 116 as would be appreciated by one skilled in the art. Particular examples of machine learning models 116 and their use in generating model-based signals 114 are described in further detail below.

In some embodiments, each ticket recipient 106 may have or be associated with one or more rule sets 118. A rule set 118 for a ticket recipient 106 includes one or more rules defining criteria for routing an incident ticket 104 to or away from the ticket recipient 106. Particularly, in some embodiments, a rule set 118 may include one or more user-defined rules. These user-defined rules may be defined by the ticket recipient 106 (e.g., by a user or a member of the ticket recipient 106) or by another user and assigned to a particular ticket recipient 106. Thus, each ticket recipient 106 may define their respective rule sets 118 so as to control how incident tickets 104 are routed to them. In some embodiments, where the ticket manager 102 uses multiple rule-based signals 112, a given ticket recipient 106 may have different rule sets 118 used in calculating each rule-based signal 112.

For example, in some embodiments, a rule set 118 may define one or more criteria that, if satisfied, indicate that an incident ticket 104 should be routed to that ticket recipient 106. As another example, in some embodiments, a rule set 118 may define one or more criteria that, if satisfied, indicate that an incident ticket 104 should not be routed to that ticket recipient 106. In some embodiments, these rules may indicate a different ticket recipient 106 to which the incident ticket 104 should be routed.

In some embodiments, a rule-based signal 112 may be calculated or generated by applying the rule sets 118 for all ticket recipients 106. In some existing implementations, recipient-specific or recipient-defined rules or workflows for rerouting incident tickets 104 may be applied when an incident ticket 104 is added to the ticket queue 108 of the ticket recipient 106. Thus, in these implementations, when an incident ticket 104 is routed to a particular ticket recipient 106 the rules or workflows only for that ticket recipient 106 may be triggered so as to determine whether the incident ticket 104 should be rerouted to another ticket recipient 106. These existing implementations do not take into consideration the rules or workflows for other ticket recipients 106. In contrast, the approaches set forth herein allow for rule-based signals 112 to be calculated or generated using the rule sets 118 for all possible ticket recipients 106, increasing the likelihood that the incident ticket 104 is ultimately routed to the correct ticket recipient 106.

In some embodiments, the rule-based signals 112 may include a rule-based signal 112 calculated or generated by applying the rule sets 118 for all possible ticket recipients 106 to the information included in the incident ticket 104 itself. These rule-based signals 112 are hereinafter referred to as "incident information" rule-based signals 112. In some embodiments, a rule set 118 may include rules defining values for particular fields of the incident ticket 104 that, if present or if not present, indicate that the incident ticket 104 should or should not be routed to the ticket recipient 106 corresponding to that rule set 118.

In some embodiments, the rule-based signals 112 may include a rule-based signal 112 calculated or generated by applying all applying the rule sets 118 for all possible ticket recipients 106 to data collected from one or more computing system components (e.g., computing devices, nodes, virtual machines, applications, or other components as can be appreciated), such as components associated with the incident ticket 104. For example, in some embodiments, components may periodically generate log data 120 describing various metrics, events, or other data associated with operation of the component. This log data 120 may be stored as records of a database 122 or another data store for subsequent access. Accordingly, in some embodiments, the rule sets 118 for the possible ticket recipients 106 may be applied to this log data 120 by querying the log data 120 from the database 122. These rule-based signals 112 calculated or generated using queried log data 120 are hereinafter referred to as "query information" rule-based signals 112. For example, in some embodiments, the ticket manager 102 may access information from the incident ticket 104 such as machine identifiers, dates and/or times of events, or other information and use that information to query the database 122 for the log data 120. The rule sets 118 may then be applied to this log data 120.

In some embodiments, calculating or generating a rule-based signal 112 includes applying the rule sets 118 for each possible ticket recipient 106 to the subject data (e.g., information in the incident ticket 104 for an incident information rule-based signal 112 or queried log data 120 for a query information rule-based signal 112) and determining if any rules are satisfied indicating that a particular ticket recipient 106 should be assigned the incident ticket 104. If so, the rule-based signal 112 may include a routing decision to route the incident ticket 104 to the particular ticket recipient 106.

In some embodiments, a rule-based signal 112 may also include a confidence score indicating a confidence or probability that the incident ticket 104 should be routed to the particular ticket recipient 106. In some embodiments, the confidence score may include a binary value (e.g., one or zero). For example, should a particular rule or combination of rules be satisfied indicating that the incident ticket 104 should be routed to the particular ticket recipient 106 this rule-based signal 112 may be assigned a default, highest confidence score (e.g., one). Otherwise, as no rule or combination of rules were satisfied to indicate a particular ticket recipient 106 for the incident ticket 104, the rule-based signal 112 may be assigned a default, lowest confidence score (e.g., zero). This serves to indicate that the corresponding rule-based signal 112 did not produce a confident or definitive result and that other rule-based signals 112 or model-based signals 114 should take priority in routing the incident ticket 104.

In some embodiments, the confidence score may be dependent on the particular rule or rules satisfied so as to identify the ticket recipient 106 for the incident ticket 104. For example, certain rules, if satisfied, may indicate a high probability that the incident ticket 104 should be routed to a particular ticket recipient 106 and are therefore assigned a high confidence score. Other rules may indicate low probabilities and are therefore assigned a low confidence score. Accordingly, the rule-based signal 112 may include the highest confidence score and the corresponding ticket recipient 106 for the satisfied rules that produced this highest confidence score. Other approaches may also be used to calculate the confidence score for a rule-based signal 112.

In some embodiments, multiple rules may be satisfied indicating that the incident ticket 104 should be routed to different ticket recipients 106. In other words, in some embodiments, applying the rule sets 118 for a particular rule-based signal 112 produced conflicting results. In some embodiments, these conflicting rules may be resolved so as to select a ticket recipient 106 for the corresponding rule-based signal 112. For example, in some embodiments, different rules and/or rule sets 118 may be assigned different priority values. Accordingly, in some embodiments, conflicting rules may be resolved by identifying the satisfied rule with the highest priority value and including the ticket recipient 106, and potentially the confidence score, corresponding to this highest priority rule.

As another example, in some embodiments, an incident ticket 104 may be initially routed or assigned to a particular ticket recipient 106 as described above. In some embodiments, where conflicting rules are satisfied so as to identify different ticket recipients 106 for an incident ticket 104 and the particular ticket recipient 106 is included in these different ticket recipients 106, the particular ticket recipient 106 may take priority over other ticket recipients 106. Thus, the ticket recipient 106 to which the incident ticket 104 was initially routed will be identified in the corresponding rule-based signals 112. Other approaches may also be used to resolve conflicts between satisfied rules.

As is set forth above, routing signals 110 may also include model-based signals 114 whereby a machine learning model 116 may be used to aggregate or select the data used in calculating a model-based signal 114 and/or to calculate or generate the model-based signal 114 itself. In some embodiments, a model-based signal 114 may be calculated by identifying one or more historical tickets 124 similar to the received incident ticket 104. A historical ticket 124 is a previously received incident ticket 104 that is no longer actively being addressed. For example, in some embodiments, a historical ticket 124 may include an incident ticket 104 in a closed and/or resolved state.

In some embodiments, these similar historical tickets 124 may be identified or accessed from a database 122 or other repository of historical tickets 124. In some embodiments, the similar historical tickets 124 may be identified from a particular time range of historical tickets 124, such as the past six months. In some embodiments, this time range may be applied to various date- or time-based attributes of a historical ticket 124 such as its creation date or its closure or resolution date. Identifying the similar historical tickets 124 may be performed according to various approaches. In some embodiments, these similar historical tickets 124 may be identified by applying keyword matching, keyword similarity, text similarity, or other similarity functions to one or more fields of the received incident tickets 124 and the historical tickets 124 to produce a similarity score. For example, in some embodiments, these similar historical tickets 124 may be identified by performing keyword matching or text similarity on the title, description, or other fields of the historical tickets 124 and the received incident ticket 104. Accordingly, in some embodiments, a historical ticket 124 may be deemed similar to the received incident ticket 104 where its similarity score relative to the received incident ticket 104 exceeds some threshold.

In some embodiments, a machine learning model 116 may be used to identify similar historical tickets 124. For example, in some embodiments, a machine learning model 116 may be trained using a training data set for identifying similar incident tickets 104. In this example, such a training data set may include positive examples of pairs of incident tickets 104 deemed similar and/or negative examples of pairs of incident tickets 104 deemed dissimilar. Accordingly, in some embodiments, the received incident ticket 104 and the historical tickets 124 may be provided as input to this trained machine learning model 116 to identify one or more similar historical tickets 124.

In some embodiments, similar historical tickets 124 may be identified by comparing a vector embedding of the received incident ticket 104 to the vector embeddings of historical tickets 124. A vector embedding is a conversion or representation of some data as a vector of numerical values. These vector embeddings may be generated using various approaches. For example, in some embodiments, some machine learning models 116 such as generative artificial intelligence (AI) models may include encoder components that convert data to vector embeddings. Accordingly, in some embodiments, an encoder of a machine learning model 116 may be used to generate the vector embeddings for the received incident ticket 104 and the historical tickets 124. In some embodiments, the vector embedding for an incident ticket 104 or historical ticket 124 may include the vector embedding of one or more fields, such as a title, a description, and the like. In some embodiments, a machine learning model 116 such as a large language model (LLM) or other generative artificial intelligence model capable of processing natural language may be used to generate a summary of an incident ticket 104 or historical ticket 124. Accordingly, in some embodiments, the vector embedding for an incident ticket 104 or historical ticket 124 may include a vector embedding of such a summary.

As a vector embedding is a vector of numerical values it can be represented as a point in multidimensional space. Accordingly, in some embodiments, similar historical tickets 124 may be identified by identifying those historical tickets 124 whose vector embeddings are a distance (e.g., in multidimensional space) from the vector embedding of the received incident ticket 104 below some threshold. This distance may be calculated using any function for calculating distance in multidimensional space such as Euclidian distance, cosine distance, or another distance function as can be appreciated.

These similar historical tickets 124 may then be used to calculate one or more model-based signals 114. In some embodiments, a model-based signal 114 may include a signal indicating a likelihood or probability that the incident ticket 104 can the automatically resolved, hereinafter referred to as an "automation" model-based signal 114. An incident ticket 104 can be automatically resolved where it can be placed in a resolved or mitigated state (e.g., by tagging or otherwise indicating, in the incident ticket 104, that it is resolved) without human intervention, and therefore without routing to a ticket recipient 106 for further action. As an example, an incident ticket 104 can be automatically resolved by executing a workflow or other set of automatically performed actions that remediate or mediate the event described by the incident ticket 104.

As another example, an incident ticket 104 can be automatically resolved by taking no action with respect to the event described by incident ticket 104, such as by marking the incident ticket 104 without further action. Continuing with this example, in some embodiments, similar or identical incident tickets 104 may be repeatedly submitted by a user or by some process and may or may not describe actual events. As these incident tickets 104 are similar to unwanted mass communications they may be referred to as "spam" incident tickets 104. Accordingly, in some embodiments, an automation model-based signal 114 may be considered a "spam" model-based signal 114 in that it may indicate a likelihood or probability that the incident ticket 104 is spam. In these examples, a spam incident ticket 104 may be automatically remediated by marking the incident ticket 104 as resolved automatically so as to not be added to the ticket queue 108 of any ticket recipient 106, thereby preventing ticket queues 108 from being overburdened with incident tickets 104.

In some embodiments, to calculate or generate the automation model-based signals 114, the ticket manager 102 may extract or calculate various metrics related to the identified similar historical tickets 124. For example, such metrics may include a number or ratio of historical tickets 124 that were automatically generated by some process or service as identified by a creator of a historical ticket 124. As another example, such metrics may include a number or ratio of historical tickets 124 that were automatically resolved, such as by executing some workflow or by automatically marking the historical ticket 124 as resolved. As a further example, such metrics may include a number or ratio of historical tickets 124 that were routed to some initial ticket recipient 106 and rerouted to a different ticket recipient 106, indicating an initial misroute. As yet another example, such metrics may include a number or ratio of historical tickets 124 with a particular tag or designation, such as a tag or designation that the historical ticket 124 was spam or otherwise unwanted or erroneous. These metrics may then be used to calculate, as the automation model-based signal 114, the probability that the incident ticket 104 can be automatically remediated. In some embodiments, this includes applying mathematical fuzzy logic to these metrics, applying some other function or algorithm to these metrics, or providing these metrics as input to a machine learning model 116 trained to provide, as output, the automation model-based signal 114.

In some embodiments, a model-based signal 114 may include a signal indicating a likelihood or probability that the incident ticket 104 should be routed to a particular ticket recipient 106 based on the ticket recipients 106 to which resolved similar historical tickets 124 were routed. Such a model-based signal 114 is referred to as a "routing" model-based signal 114. Readers will appreciate that, in some embodiments, an incident ticket 104 may be closed, indicating that no further action should be taken, without necessarily being marked as resolved, meaning that a resolution or mitigation was found for the underlying event described by the incident ticket 104. Accordingly, in some embodiments, the ticket manager 102 identifies a subset of the similar historical tickets 124 marked as resolved.

Next, the ticket manager 102 calculates, for each ticket recipient 106 that resolved a similar historical ticket 124, a number of the similar historical tickets 124 resolved by that ticket recipient 106. If a particular ticket recipient 106 has resolved a threshold number or percentage of the similar historical tickets 124 that ticket recipient 106 will be indicated, in the routing model-based signal 114, as the ticket recipient 106 to which the received incident ticket 104 should be routed. In some embodiments, a confidence score for the routing model-based signal 114 may be calculated as a function of the number or percentage of the similar historical tickets 124 resolved by the ticket recipient 106.

Readers will appreciate that the routing signals 110 described above are merely illustrative and that other routing signals 110 are also contemplated within the scope of the present disclosure and may be used in addition to, or instead of, any of the routing signals 110 described above. For example, in some embodiments, a machine learning model 116 that can process and interpret natural language information, such as an LLM, may be trained on or may access (e.g., through retrieval augmented generation or another approach) some documentation related to incident tickets 104. Such documentation may include, for example, playbooks, best practice guides, employee handbooks, and the like describing steps for resolving or mitigating events described in incident tickets 104. In this example, the machine learning model 116 may accept, as input, the incident ticket 104 or data included therein and provide, as output, an indication of a particular ticket recipient 106 determined based on this documentation related to incident tickets 104. This output may then be used as a model-based signal 114 as described herein.

Having calculated the different routing signals 110, the ticket manager 102 then determines a routing decision for the received incident ticket 104. A routing decision indicates whether or not the incident ticket 104 should be automatically resolved and, if not, to which ticket recipient 106 the incident ticket 104 should be routed. Determining the routing decision may be performed using various approaches. In some embodiments, a routing signal 110 with a highest confidence score can be identified. The routing decision is then determined as the routing decision for that routing signal 110.

In some embodiments, each routing signal 110 may have an associated priority value. In such embodiments, each routing signal 110 is compared to a corresponding threshold. In some embodiments, each routing signal 110 may be compared to the same threshold or to a different threshold (e.g., each different routing signal 110 is compared to its own corresponding threshold). In some embodiments, the ticket manager 102 identifies a highest-priority routing signal 110 that exceeds its corresponding threshold. The routing decision may then be determined as the routing signal for the highest-ranked routing signal 110 that meets or exceeds its threshold. In some embodiments, the priority values for each routing signal 110 and their corresponding thresholds may vary according to design or engineering considerations.

As an example, assume that, for an incident ticket 104, the ticket manager 102 calculates an incident information rule-based signal 112 with a confidence score of 1.0, a query information rule-based signal 112 with a confidence score of 0.8, an automation model-based signal 112 with a confidence score of 0.65 and a routing model-based signal 112 of 0.9. Further assume that the routing signals 110 are ranked by priority value with the automation model-based signal 112 as the highest priority, followed by the incident information rule-based signal 112, then the query information rule-based signal 112, with the routing model-based signal 112 as the lowest priority routing signal 110.

In this example, the automation model-based signal 112 is compared to an example threshold of 0.9. As this confidence score falls below the corresponding threshold, the incident information rule-based signal 112 is compared to an example threshold of 1.0, indicating that one or more rules were satisfied that identified a ticket recipient 106 for the incident ticket 104. Accordingly, the received incident ticket 104 is routed to the ticket recipient 106 indicated by these satisfied rules. As the second-highest priority routing signal 110 was satisfied and used to route the incident ticket 104 the remaining, lower-priority routing signals 110 need not be compared to their respective thresholds.

As another example, assume routing signals 110 with the same confidence scores as in the example above, except for an automation model-based signal 112 with a confidence score of 0.95. Here, the automation model-based signal 112 exceeds its threshold, indicating a high probability that the incident ticket 104 can be automatically resolved. Accordingly, in some embodiments, this incident ticket 104 may be automatically marked as resolved without routing to a ticket recipient 106. In some embodiments, this incident ticket 104 may be marked or annotated with data indicating that the incident ticket 104 was automatically resolved.

In some embodiments, it may be possible for no routing signal 110 to meet any threshold to which it is compared. In response, in some embodiments, the ticket manager 102 may determine the routing decision for the incident ticket 104 by determining to route the incident ticket 104 to a default ticket recipient 106. For example, in some embodiments, there may be a designated ticket recipient 106 for triaging or manually rerouting incident tickets 104 that could not be automatically routed or resolved. As is set forth above, in some embodiments, an incident ticket 104 may be initially routed or assigned to some ticket recipient 106. Accordingly, in some embodiments where no routing signal 110 meets the threshold to which it is compared, the incident ticket 104 may remain routed or assigned to this ticket recipient 106 and added to their ticket queue 108 if not already present. In some embodiments, this incident ticket 104 may be marked or annotated with data indicating that the incident ticket 104 was routed to an initial or default ticket recipient 106 as no particular routing signal 110 indicated where the incident ticket 104 should be routed with sufficient confidence.

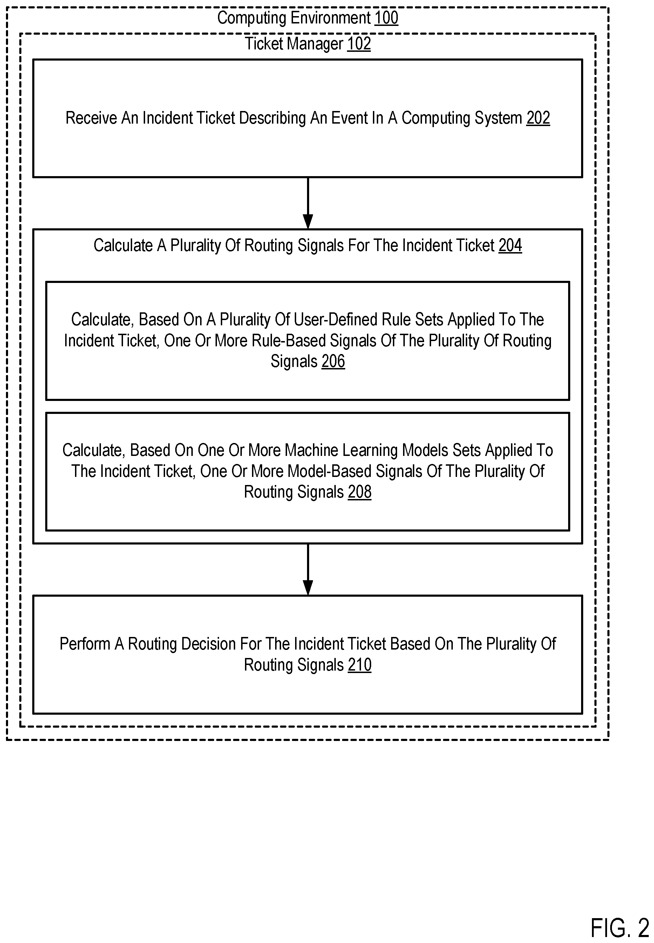

For further explanation, Fig. 2 sets forth a flowchart of an example method of automatically routing incident tickets in accordance with some embodiments of the present disclosure. The method of Fig. 2 may be performed, for example, by a ticket manager 102 such as in the computing environment 100 of Fig. 1. The method of Fig. 2 includes receiving 202 an incident ticket 104 describing an event in a computing system. The computing system in which the event occurred or was detected may include the computing environment 100 or some other computing system. In some embodiments, the incident ticket 104 may be submitted to the ticket manager 102 by a user. For example, in some embodiments, a user may access an interface (e.g., a graphical user interface (GUI), a command line interface (CLI), an application programming interface (API), and the like) for encoding and submitting an incident ticket 104. In some embodiments, the incident ticket 104 may be generated by a process or service in the computing system that experienced the associated event or a process or service monitoring the computing system that experienced the associated event. This process or service may then submit the incident ticket 104 to the ticket manager 102.

In some embodiments, in response to receiving 202 the incident ticket 104, the ticket manager 102 may add the incident ticket 104 to a ticket queue of some ticket recipient 106. For example, in some embodiments, the incident ticket 104 may indicate a particular ticket recipient 106 such that the incident ticket 104 is automatically initially assigned or routed to the particular ticket recipient 106. As another example, in some embodiments, the incident ticket 104 may include tags, classifications, or other information corresponding to a particular ticket recipient 106 such that incident tickets 104 with that information are automatically initially assigned or routed to the particular ticket recipient 106. In some embodiments, in response to receiving 202 the incident ticket 104, the ticket manager 102 may refrain from initially routing or assigning the incident ticket 104 to any particular ticket recipient 106.

The method of Fig. 2 also includes calculating 204 a plurality of routing signals 110 for the incident ticket 104. In some embodiments, a routing signal 110 includes one or more data points used by the ticket manager 102 in determining how to route an incident ticket 104. Particularly, in some embodiments, the ticket manager 102 uses a combination of rule-based signals 112 and model-based signals 114 in determining how to route an incident ticket 104. Accordingly, in some embodiments, calculating 204 the plurality of routing signals 110 for the incident ticket 104 includes calculating 206, based on a plurality of user-defined rule sets 118 applied to the incident ticket 104, one or more rule-based signals 112 of the plurality of routing signals 110.

Rule-based signals 112 are routing signals 110 calculated or generated by applying one or more rules to some data. Specific examples of rule-based signals 112 and how they are calculated or generated are described in further detail below in subsequent flowcharts. In some embodiments, these rules are included in rule sets 118 each corresponding to a particular ticket recipient 106 of multiple potential ticket recipients 106 to which the incident ticket 104 may be routed. A rule set 118 for a ticket recipient 106 includes one or more rules defining criteria for routing an incident ticket 104 to or away from the ticket recipient 106. Particularly, in some embodiments, a rule set 118 may include one or more user-defined rules. These user-defined rules may be defined by the ticket recipient 106 (e.g., by a user or a member of the ticket recipient 106) or by another user and added to a rule set 118 of particular ticket recipient 106. Thus, in some embodiments, each ticket recipient 106 may define their respective rule sets 118 so as to control how incident tickets 104 are routed to them. In some embodiments, where the ticket manager 102 uses multiple rule-based signals 112 to route an incident ticket 104, a given ticket recipient 106 may have different rule sets 118 used in calculating each rule-based signal 112.

In some embodiments, a rule-based signal 112 may be calculated or generated by applying the rule sets 118 for all possible ticket recipients 106. This is in contrast to some existing implementations where rule sets 118 or workflows for particular ticket recipients 106 used to route incident tickets 104 are only applied for that particular ticket recipient 106 after the incident ticket 104 has been initially routed or assigned to that ticket recipient 106 (e.g., by adding the incident ticket 104 to their respective ticket queue 108. Applying the rule sets 118 for all possible ticket recipients 106 increases the likelihood that the incident ticket 104 is ultimately routed to the correct ticket recipient 106.

In some embodiments, calculating 204 the plurality of routing signals 110 for the incident ticket 104 also includes calculating 208, based on one or more machine learning models 116 applied to the incident ticket 104, one or more model-based signals 114 of the plurality of routing signals 110. Model-based signals 114 are routing signals 110 calculated or generated using one or more machine learning models 116. For example, a machine learning model 116 may be used to aggregate or select the data used in calculating a model-based signal 114 and/or to calculate or generate the model-based signal 114 itself. A machine learning model 116 may include any type of machine learning model 116 as would be appreciated by one skilled in the art. Specific examples of model-based signals 114 and how they are calculated or generated are described in further detail below in subsequent flowcharts.

The method of Fig. 2 also includes performing 210 a routing decision for the incident ticket 104 based on the plurality of routing signals 110. A routing decision is an action whereby the incident ticket 104 is routed to some ticket recipient 106 or otherwise automatically resolved without being routed to some ticket recipient 106. In other words, a routing decision may include routing the incident ticket 104 to some ticket recipient 106 or refraining from routing the incident ticket 104 to a ticket recipient 106. Accordingly, the ticket manager 102 performs 210 the routing decision by first determining the particular routing decision to perform. The ticket manager 102 may determine the routing decision using various approaches that use routing signals 110 as factors or data points.

For example, in some embodiments, the ticket manager 102 may identify a routing signal 110 with a highest confidence score and determine the routing decision as the routing decision for that routing signal 110. As another example, multiple routing signals 110 may be used as parameters in a function used to calculate or determine a routing decision. As a further example, described in further detail below, the ticket manager 102 may identify a highest priority routing signal 110 whose confidence score exceeds some corresponding threshold. Other approaches for determining a routing decision using routing signals 110 are also contemplated within the scope of the present disclosure.

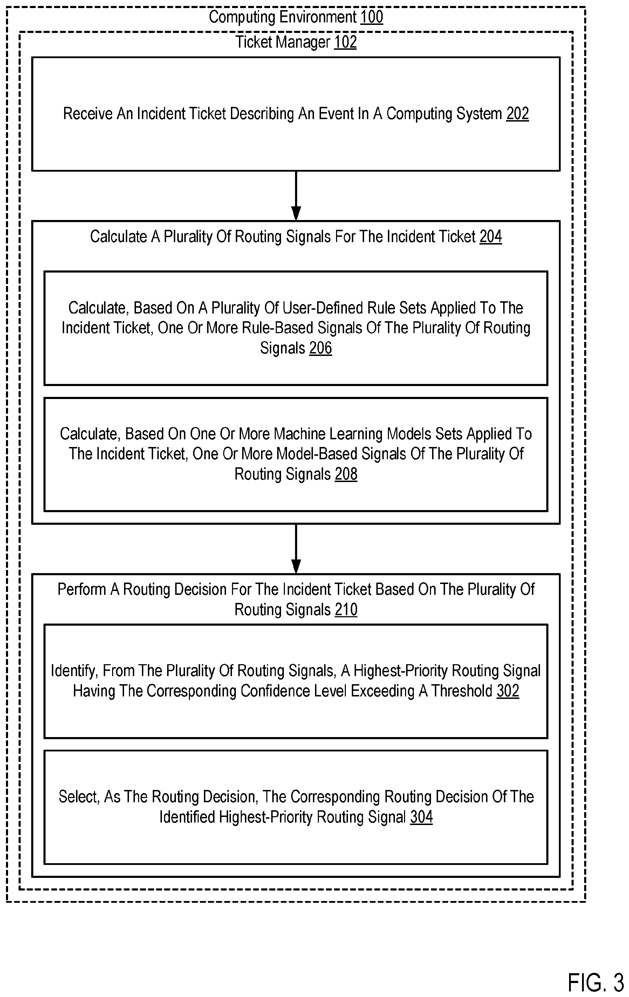

For further explanation, Fig. 3 sets forth a flowchart of another example method of automatically routing incident tickets in accordance with some embodiments of the present disclosure. The method of Fig. 3 is similar to Fig. 2, differing in that performing 210 a routing decision for the incident ticket 104 based on the plurality of routing signals 110 also includes identifying 302, from the plurality of routing signals 110, a highest-priority routing signal having a corresponding confidence level exceeding a threshold; and selecting 304, as the routing decision, the corresponding routing decision of the identified highest-priority routing signal 110.

In some embodiments, each routing signal 110 may have an associated priority value. In such embodiments, each routing signal 110 is compared to a corresponding threshold. In some embodiments, each routing signal 110 may be compared to the same threshold or to a different threshold (e.g., each different routing signal 110 is compared to its own corresponding threshold). In some embodiments, the ticket manager 102 identifies a highest-priority routing signal 110 that exceeds its corresponding threshold. The routing decision may then be determined as the routing signal for the highest-ranked routing signal 110 that meets or exceeds its threshold. In some embodiments, the priority values for each routing signal 110 and their corresponding thresholds may vary according to design or engineering considerations.

As an example, assume that, for an incident ticket 104, the ticket manager 102 calculates three routing signals 110 A, B, and C, with routing signal 110 A having the highest priority and routing signal 110 C having the lowest priority. Further assume that routing signals 110 A, B, and C indicate that the incident ticket 104 should be routed to ticket recipients 106 X, Y, and Z, respectively. In this example, if routing signal 110 A exceeds its threshold the incident ticket 104 will be routed to ticket recipient 106 A. If routing signal 110 A fails to exceed its threshold the ticket manager 102 then determines if routing signal 110 B exceeds its threshold. If so, the incident ticket 104 will be routed to ticket recipient 106 Y. Otherwise, ticket manager 102 then determines if routing signal 110 C exceeds its threshold. If so, the incident ticket 104 will be routed to ticket recipient 106 Z. Otherwise, some other action may be taken such as routing the incident ticket 104 to an initially assigned ticket recipient 106.

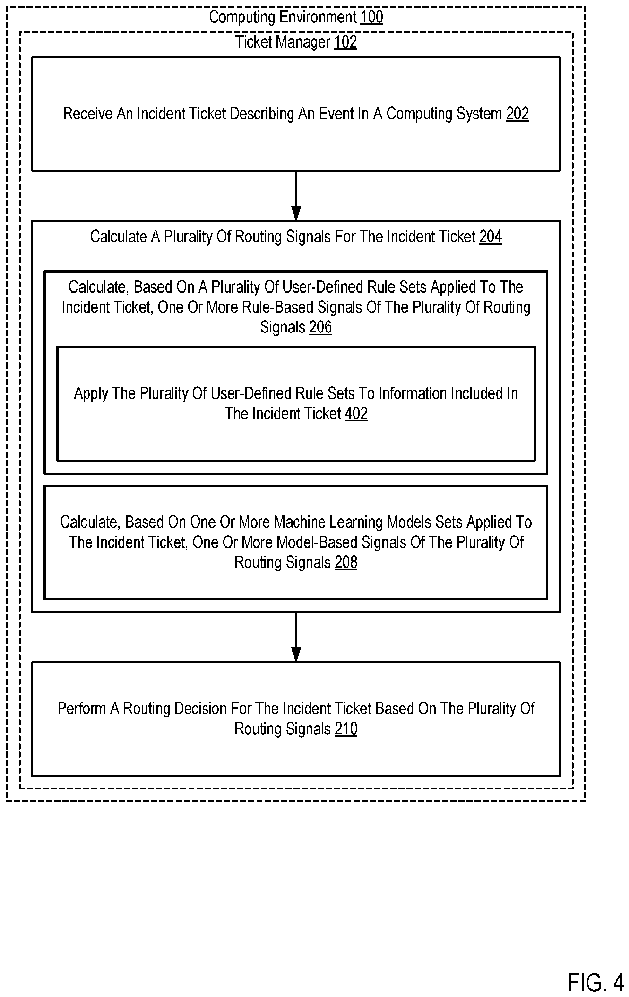

For further explanation, Fig. 4 sets forth a flowchart of an example method of automatically routing incident tickets in accordance with some embodiments of the present disclosure. The method of Fig. 4 is similar to Fig. 2, differing in that calculating 206, based on a plurality of user-defined rule sets 118 applied to the incident ticket 104, one or more rule-based signals 112 of the plurality of routing signals 110 includes applying 402 the plurality of user-defined rule sets to information included in the incident ticket 104. In some embodiments, a rule set 118 may include rules defining values for particular fields of the incident ticket 104 that, if present or if not present, indicate that the incident ticket 104 should or should not be routed to the ticket recipient 106 corresponding to that rule set 118. As an example, a rule set for a particular ticket recipient 106 may indicate that incident tickets 104 with a particular title should be routed to that ticket recipient 106. These rules are then applied 402 to calculate an incident information rule-based signal 112.

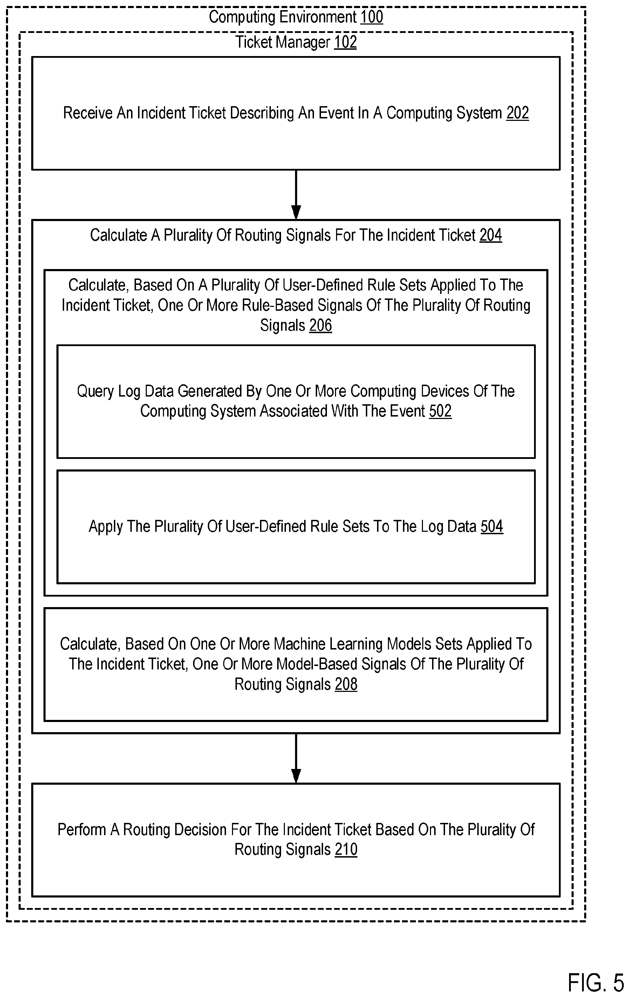

For further explanation, Fig. 5 sets forth a flowchart of an example method of automatically routing incident tickets in accordance with some embodiments of the present disclosure. The method of Fig. 5 is similar to Fig. 2, differing in that calculating 206, based on a plurality of user-defined rule sets 118 applied to the incident ticket 104, one or more rule-based signals 112 of the plurality of routing signals 110 includes querying 502 log data 120 generated by one or more computing devices of the computing system associated with the event. For example, in some embodiments, components of the computing system associated with the event may periodically generate log data 120 describing various metrics, events, or other data associated with operation of the component. This log data 120 may be stored as records of a database 122 or another data store for subsequent access. Accordingly, in some embodiments, the rule sets 118 for the possible ticket recipients 106 may be applied to this log data 120 by querying 502 the log data 120 from the database 122. For example, in some embodiments, the ticket manager 102 may access information from the incident ticket 104 such as machine identifiers, dates and/or times of events, or other information and use that information to query the database 122 for the log data 120.

The rule sets 118 are then applied to the queried 502 log data 120 to calculate a rule-based signal 112 (e.g., a query information rule-based signal 112). Accordingly, calculating 206, based on a plurality of user-defined rule sets 118 applied to the incident ticket 104, one or more rule-based signals 112 of the plurality of routing signals 110 also includes applying 504 the plurality of user-defined rule sets 118 to the log data 120.

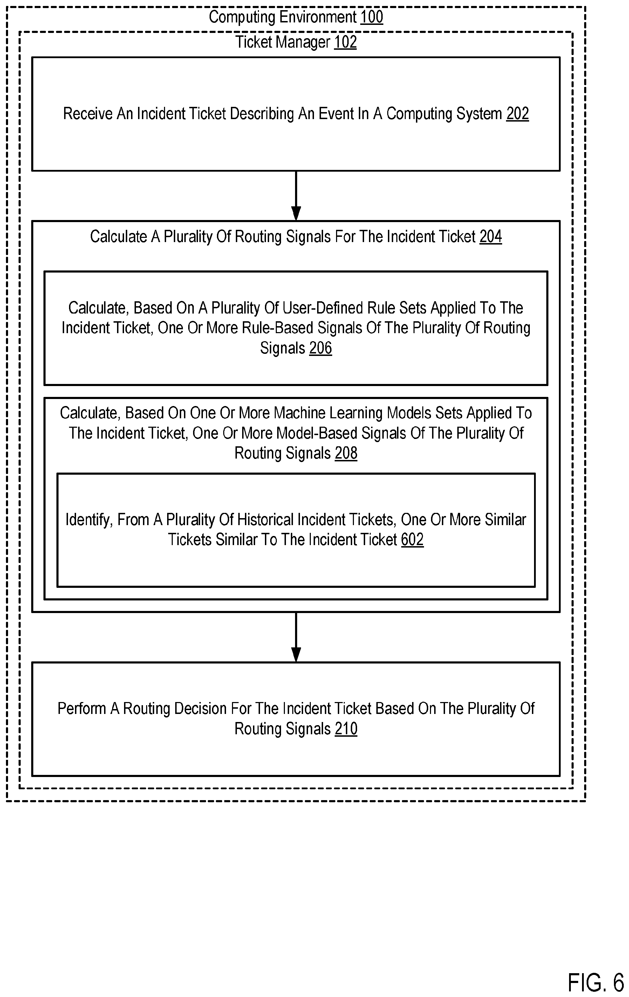

For further explanation, Fig. 6 sets forth a flowchart of an example method of automatically routing incident tickets in accordance with some embodiments of the present disclosure. The method of Fig. 6 is similar to Fig. 2, differing in that calculating 208, based on one or more machine learning models 116 applied to the incident ticket 104, one or more model-based signals 114 of the plurality of routing signals 110 also includes identifying 602, from a plurality of historical incident tickets (e.g., historical tickets 124), one or more similar tickets similar to the incident ticket 104. In some embodiments, these similar historical tickets 124 may be identified or accessed from a database 122 or other repository of historical tickets 124. In some embodiments, the similar historical tickets 124 may be identified from a particular time range of historical tickets 124, such as the past six months. In some embodiments, this time range may be applied to various date- or time-based attributes of a historical ticket 124 such as its creation date or its closure or resolution date.

Identifying 602 the similar historical tickets 124 may be performed according to various approaches. In some embodiments, these similar historical tickets 124 may be identified 602 by applying keyword matching, keyword similarity, text similarity, or other similarity functions to one or more fields of the received incident tickets 124 and the historical tickets 124 to produce a similarity score or another metric. For example, in some embodiments, these similar historical tickets 124 may be identified 602 by performing keyword matching or text similarity on the title, description, or other fields of the historical tickets 124 and the received incident ticket 104. Accordingly, in some embodiments, a historical ticket 124 may be deemed similar to the received incident ticket 104 where its similarity score or metric relative to the received incident ticket 104 exceeds some threshold.

In some embodiments, a machine learning model 116 may be used to identify similar historical tickets 124. For example, in some embodiments, a machine learning model 116 may be trained using a training data set for identifying similar incident tickets 104. In this example, such a training data set may include positive examples of pairs of incident tickets 104 deemed similar and/or negative examples of pairs of incident tickets 104 deemed dissimilar. Accordingly, in some embodiments, the received incident ticket 104 and the historical tickets 124 may be provided as input to this trained machine learning model 116 to identify one or more similar historical tickets 124.

In some embodiments, similar historical tickets 124 may be identified by comparing a vector embedding of the received incident ticket 104 to the vector embeddings of historical tickets 124. A vector embedding is a conversion or representation of some data as a vector of numerical values, which may correspond to a point in multidimensional space. Accordingly, the distance between two embeddings may be calculated as a distance between two points in multidimensional space using some distance function such as cosine distance, Euclidian distance, and the like. Thus, in some embodiments, an incident ticket 104 and a historical ticket 124 may be deemed similar where the distance between their associated embeddings falls below some distance threshold.

These vector embeddings may be generated using various approaches. For example, in some embodiments, some machine learning models 116 such as generative artificial intelligence (AI) models may include encoder components that convert data to vector embeddings. Accordingly, in some embodiments, an encoder of a machine learning model 116 may be used to generate the vector embeddings for the received incident ticket 104 and the historical tickets 124. In some embodiments, the vector embedding for an incident ticket 104 or historical ticket 124 may include the vector embedding of one or more fields, such as a title, a description, and the like. In some embodiments, a machine learning model 116 such as a large language model (LLM) or other generative artificial intelligence model capable of processing natural language may be used to generate a summary of an incident ticket 104 or historical ticket 124. Accordingly, in some embodiments, the vector embedding for an incident ticket 104 or historical ticket 124 may include a vector embedding of such a summary.

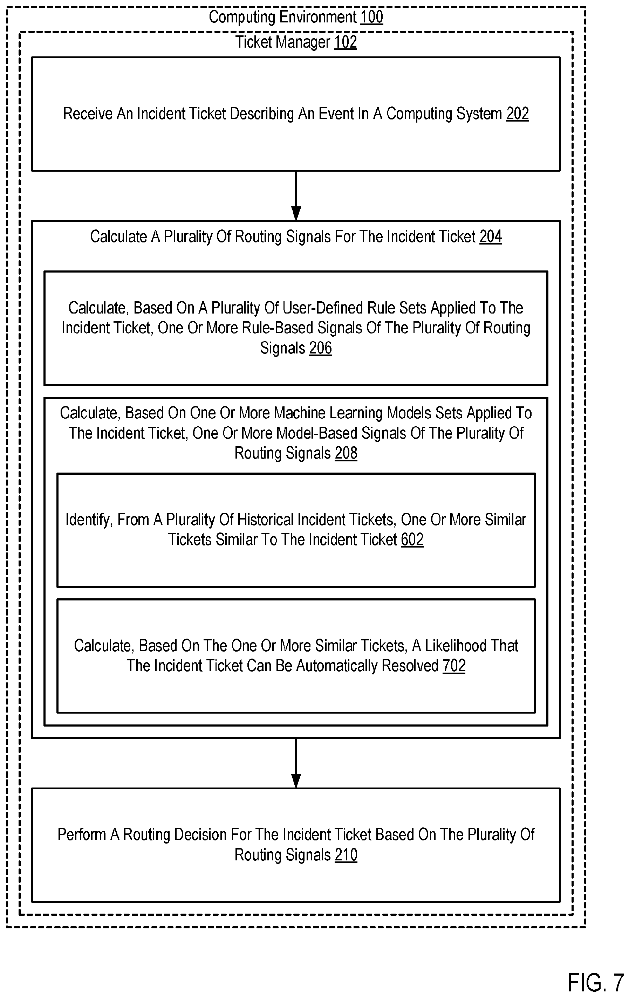

For further explanation, Fig. 7 sets forth a flowchart of an example method of automatically routing incident tickets in accordance with some embodiments of the present disclosure. The method of Fig. 7 is similar to Fig. 6, differing in that calculating 208, based on one or more machine learning models 116 applied to the incident ticket 104, one or more model-based signals 114 of the plurality of routing signals 110 also includes calculating 702, based on the one or more similar tickets, a likelihood that the incident ticket 104 can be automatically resolved. An incident ticket 104 can be automatically resolved where it can be placed in a resolved or mitigated state (e.g., by tagging or otherwise indicating, in the incident ticket 104, that it is resolved) without human intervention, and therefore without routing to a ticket recipient 106 for further action. As an example, an incident ticket 104 can be automatically resolved by executing a workflow or other set of automatically performed actions that remediate or mediate the event described by the incident ticket 104. As another example, an incident ticket 104 can be automatically resolved by taking no action with respect to the event described by incident ticket 104, such as by marking the incident ticket 104 without further action. Accordingly, in some embodiments, the likelihood that the incident ticket 104 can be automatically resolved may be expressed or encoded as an automation model-based signal 114.

In some embodiments, calculating 702 the likelihood that the incident ticket 104 can be automatically resolved includes extracting or calculate various metrics related to the identified similar historical tickets 124. For example, such metrics may include a number or ratio of historical tickets 124 that were automatically generated by some process or service as identified by a creator of a historical ticket 124. As another example, such metrics may include a number or ratio of historical tickets 124 that were automatically resolved, such as by executing some workflow or by automatically marking the historical ticket 124 as resolved. As a further example, such metrics may include a number or ratio of historical tickets 124 that were routed to some initial ticket recipient 106 and rerouted to a different ticket recipient 106, indicating an initial misroute. As yet another example, such metrics may include a number or ratio of historical tickets 124 with a particular tag or designation, such as a tag or designation that the historical ticket 124 was spam or otherwise unwanted or erroneous. These metrics may then be used to calculate, as the automation model-based signal 114, the probability that the incident ticket 104 can be automatically remediated. In some embodiments, this includes applying mathematical fuzzy logic to these metrics, applying some other function or algorithm to these metrics, or providing these metrics as input to a machine learning model 116 trained to provide, as output, the automation model-based signal 114.

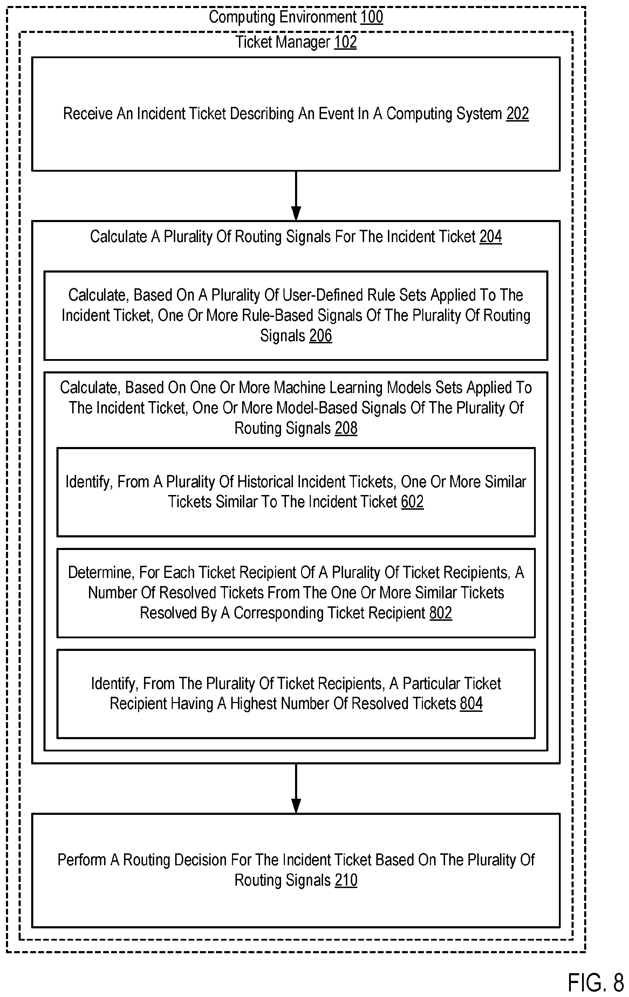

For further explanation, Fig. 8 sets forth a flowchart of an example method of automatically routing incident tickets in accordance with some embodiments of the present disclosure. The method of Fig. 8 is similar to Fig. 6, differing in that calculating 208, based on one or more machine learning models 116 applied to the incident ticket 104, one or more model-based signals 114 of the plurality of routing signals 110 also includes determining 802, for each ticket recipient 106 of a plurality of ticket recipients 106, a number of resolved tickets from the one or more similar tickets resolved by a corresponding ticket recipient 106. For example, in some embodiments, the ticket manager 102 identifies a subset of the similar historical tickets 124 marked as resolved. The ticket manager 102 then calculates, for each ticket recipient 106 that resolved a similar historical ticket 124, a number of the similar historical tickets 124 resolved by that ticket recipient 106.

The method of Fig. 8 further differs from Fig. 6 in that calculating 208, based on one or more machine learning models 116 applied to the incident ticket 104, one or more model-based signals 114 of the plurality of routing signals 110 also includes identifying 804, from the plurality of ticket recipients 106, a particular ticket recipient 106 having a highest number of resolved tickets. The identified 804 ticket recipient 106 will then be indicated or associated with a corresponding model-based routing signal 114 (e.g., a routing mode-based signal 114). In some embodiments, the particular ticket recipient 106 may be identified in response to the particular ticket recipient 106 having resolved a threshold number or percentage of the similar historical tickets 124. Thus, in some embodiments, the routing model-based signal 114 will only indicate a particular ticket recipient 106 where that ticket recipient 106 both has the highest number of resolved similar tickets and that number or percentage of resolved similar tickets exceeds some threshold.

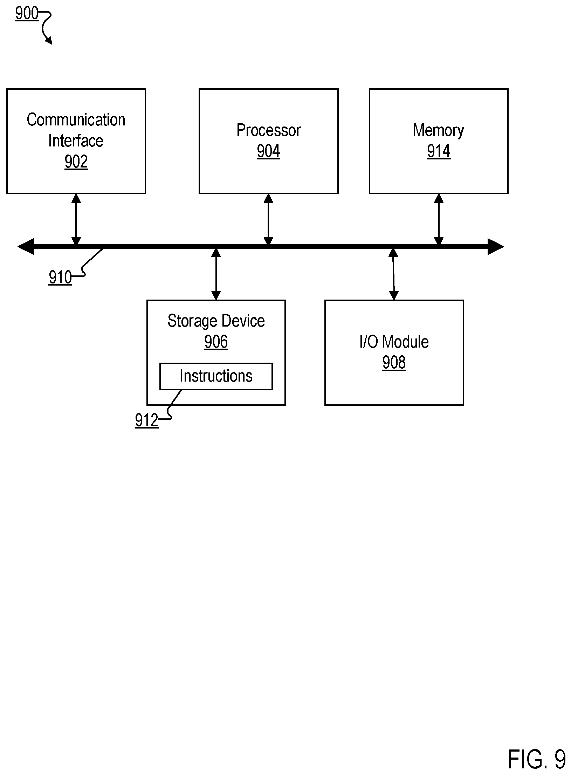

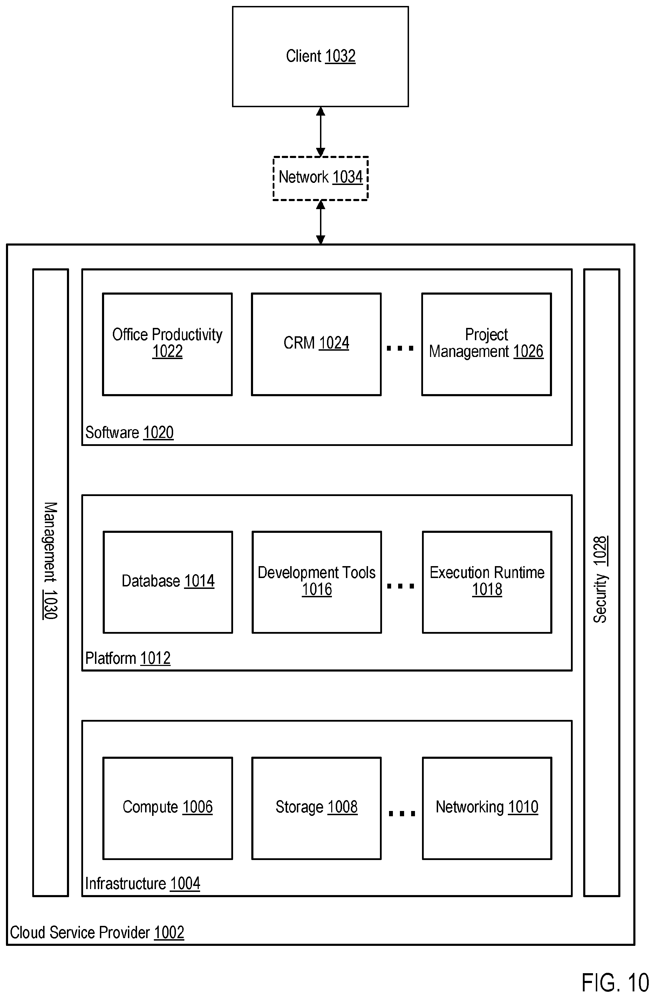

For further explanation, the sections included below provide some details regarding technologies that may be used to support automatically routing incident tickets in accordance with some embodiments. For example, Fig. 9 sets forth an example of a computing device that may be used for some portion of securing an operating system in accordance with some embodiments. As an additional example of technologies that may be used to support automatically routing incident tickets, Fig. 10 sets forth a block diagram of a cloud service provider 1002 service architecture in accordance with some embodiments of the present disclosure.

For further explanation, Fig. 9 illustrates an exemplary computing device 900 that may be specifically configured to perform one or more of the processes described herein. As shown in Fig. 9, computing device 900 may include a communication interface 902, a processor 904, a storage device 906, an input/output (I/O) module 908, and computer memory 914 communicatively connected one to another via a communication infrastructure 910. While an exemplary computing device 900 is shown in Fig. 9, the components illustrated in Fig. 9 are not intended to be limiting. Additional or alternative components may be used in other embodiments. Components of computing device 900 shown in Fig. 9 will now be described in additional detail.

Communication interface 902 may be configured to communicate with one or more computing devices. Examples of communication interface 902 include, without limitation, a wired network interface (such as a network interface card), a wireless network interface (such as a wireless network interface card), a modem, an audio/video connection, and any other suitable interface.

Processor 904 generally represents any type or form of processing unit capable of processing data and/or interpreting, executing, and/or directing execution of one or more of the instructions, processes, and/or operations described herein. Processor 904 may perform operations by executing computer-executable instructions 912 (e.g., an application, software, code, and/or other executable data instance) stored in storage device 906.

Storage device 906 may include one or more data storage media, devices, or configurations and may employ any type, form, and combination of data storage media and/or device. For example, storage device 906 may include, but is not limited to, any combination of non-volatile media and/or volatile media. Electronic data, including data described herein, may be temporarily and/or permanently stored in storage device 906. For example, data representative of computer-executable instructions 912 configured to direct processor 904 to perform any of the operations described herein may be stored within storage device 906. In some examples, data may be arranged in one or more databases residing within storage device 906.

I/O module 908 may include one or more I/O modules configured to receive user input and provide user output. I/O module 908 may include any hardware, firmware, software, or combination thereof supportive of input and output capabilities. For example, I/O module 908 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 908 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 900.

For further explanation and as an additional example of a supporting technology for automatically routing incident tickets, Fig. 10 sets forth a block diagram of a cloud service provider service architecture in accordance with some embodiments. The cloud service provider 1002 can deliver a variety of resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 10, the cloud service provider 1002 is accessed from a client device 1034 via a network 1032.

Fig. 10 depicts an embodiment where software 1020 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 10, as examples of software 1020 that can be delivered as-a-service, the illustrated embodiment includes office productivity 1022 software, customer relationship management ('CRM') 1024 software, and project management 1026 software. The office productivity 1022 software can include applications designed to facilitate common business and personal tasks, including word processing applications, applications for spreadsheet creation, presentation design applications, and many others. The CRM 1024 software can include applications for managing a business organization's relationships and interactions with customers and potential customers. The project management 1026 software can include applications designed to help teams plan, organize, and manage projects efficiently by facilitating collaboration and tracking the progress of projects. Readers will appreciate that in other embodiments, other types of software may be delivered using a SaaS model.

Fig. 10 depicts an embodiment where platforms 1012 can be delivered as a service. Platform-as-a-service ('PaaS') is a model that provides cloud customers with platform resources that they can use to develop, run, and manage applications without the complexity of such deploying and managing such infrastructure on their own. In Fig. 10, as examples of platform 1012 resources that can be delivered as-a-service, the illustrated embodiment includes database 1014 services, development tools 1016 services, and execution runtime 1018 services. The database 1014 services can be used to provide access to databases without management overhead for the user as the cloud service provider manages the provisioning, scaling, and maintenance of the databases. The development tools 1016 services can provide developers with tools to design, develop, test, and deploy applications without needing to manage the underlying infrastructure. The execution runtime 1018 services can provide environments where applications or other forms of computer program code can be executed, including services to scale the execution environment. Readers will appreciate that in other embodiments, other platform resources may be delivered using a PaaS model.

Fig. 10 depicts an embodiment where infrastructure 1004 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 10, as examples of infrastructure 1004 resources that can be delivered as-a-service, the illustrated embodiment includes compute 1006 services, storage 1008 services, and networking 1010 services. The compute 1006 services can be used to provide on-demand access to computational resources such as VMs, containers, and serverless functions, where the cloud service provider manages the provisioning, scaling, and maintenance of such resources. The storage 1008 services can provide storage resources that can be used to store and access data, without the need for customers to purchase and manage on-premises physical storage resources. The networking 1010 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 10 also provides management 1030 resources. The management 1030 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 10 also provides security 1028 resources. The security 1028 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

This application claims priority from US application 19/191,256 filed on 28 Apr 2025, the entire contents of which are herein incorporated by reference. Advantages and features of the present disclosure can be further described by the following statements:
1. A method of automatically routing incident tickets, comprising: receiving an incident ticket describing an event in a computing system; calculating a plurality of routing signals for the incident ticket, wherein calculating the plurality of routing signals comprises: calculating, based on a plurality of user-defined rule sets applied to the incident ticket, one or more rule-based signals of the plurality of routing signals; calculating, based on one or more machine learning models sets applied to the incident ticket, one or more model-based signals of the plurality of routing signals; and performing a routing decision for the incident ticket based on the plurality of routing signals.
2. The method of statement 1, wherein each routing signal of the plurality of routing signals has a corresponding routing decision and a corresponding confidence level, and wherein performing the routing decision comprises: identifying, from the plurality of routing signals, a highest-priority routing signal having the corresponding confidence level exceeding a threshold; and selecting, as the routing decision, the corresponding routing decision of the identified highest-priority routing signal.
3. The method of statements 1 or 2, wherein the plurality of user-defined rule sets each correspond to a ticket queue of a plurality of ticket queues, and wherein each ticket queue of the plurality of ticket queues corresponds to a ticket recipient of a plurality of ticket recipients.
4. The method of any combination of one or more of statements 1-3, wherein calculating the one or more rule-based signals comprises applying the plurality of user-defined rule sets to information included in the incident ticket.
5. The method of any combination of one or more of statements 1-4, wherein calculating the one or more rule-based signals comprises: querying log data generated by one or more computing devices of the computing system associated with the event; and applying the plurality of user-defined rule sets to the log data.
6. The method of any combination of one or more of statements 1-5, wherein calculating the one or more model-based signals comprises identifying, from a plurality of historical incident tickets, one or more similar tickets similar to the incident ticket.
7. The method of any combination of one or more of statements 1-6, wherein calculating the one or more model-based signals comprises calculating, based on the one or more similar tickets, a likelihood that the incident ticket can be automatically resolved.
8. The method of any combination of one or more of statements 1-7, wherein calculating the one or more model-based signals comprises: determining, for each ticket recipient of a plurality of ticket recipients, a number of resolved tickets from the one or more similar tickets resolved by a corresponding ticket recipient; and identifying, from the plurality of ticket recipients, a particular ticket recipient having a highest number of resolved tickets.
9. An apparatus for automatically routing incident tickets, comprising: a memory; and one or more processing devices, operatively coupled to the memory, the one or more processing devices configured to: receive an incident ticket describing an event in a computing system; calculate a plurality of routing signals for the incident ticket, wherein, to calculate the plurality of routing signals, the one or more processing devices are further configured to: calculate, based on a plurality of user-defined rule sets applied to the incident ticket, one or more rule-based signals of the plurality of routing signals; calculate, based on one or more machine learning models sets applied to the incident ticket, one or more model-based signals of the plurality of routing signals; and perform a routing decision for the incident ticket based on the plurality of routing signals.
10. The apparatus of statement 9, wherein each routing signal of the plurality of routing signals has a corresponding routing decision and a corresponding confidence level, and wherein, to perform the routing decision, the one or more processing devices are further configured to: identify, from the plurality of routing signals, a highest-priority routing signal having the corresponding confidence level exceeding a threshold; and select, as the routing decision, the corresponding routing decision of the identified highest-priority routing signal.
11. The apparatus of statements 9 or 10, wherein the plurality of user-defined rule sets each correspond to a ticket queue of a plurality of ticket queues, and wherein each ticket queue of the plurality of ticket queues corresponds to a ticket recipient of a plurality of ticket recipients.
12. The apparatus of any combination of one or more of statements 9-11, wherein, to calculate the one or more rule-based signals, the one or more processing devices are further configured to apply the plurality of user-defined rule sets to information included in the incident ticket.
13. The apparatus of any combination of one or more of statements 9-12, wherein, to calculate the one or more rule-based signals, the one or more processing devices are further configured to: query log data generated by one or more computing devices of the computing system associated with the event; and apply the plurality of user-defined rule sets to the log data.
14. The apparatus of any combination of one or more of statements 9-13, wherein, to calculate the one or more model-based signals, the one or more processing devices are further configured to identify, from a plurality of historical incident tickets, one or more similar tickets similar to the incident ticket.
15. The apparatus of any combination of one or more of statements 9-14, wherein, to calculate the one or more model-based signals, the one or more processing devices are further configured to calculate, based on the one or more similar tickets, a likelihood that the incident ticket can be automatically resolved.
16. The apparatus of any combination of one or more of statements 9-15, wherein, to calculate the one or more model-based signals, the one or more processing devices are further configured to: determine, for each ticket recipient of a plurality of ticket recipients, a number of resolved tickets from the one or more similar tickets resolved by a corresponding ticket recipient; and identify, from the plurality of ticket recipients, a particular ticket recipient having a highest number of resolved tickets.
17. A non-transitory computer readable storage medium storing instructions which, when executed, cause a processing device to: receive an incident ticket describing an event in a computing system; calculate a plurality of routing signals for the incident ticket, wherein, to calculate the plurality of routing signals, the instructions, when executed, further cause the processing device to: calculate, based on a plurality of user-defined rule sets applied to the incident ticket, one or more rule-based signals of the plurality of routing signals; calculate, based on one or more machine learning models sets applied to the incident ticket, one or more model-based signals of the plurality of routing signals; and perform a routing decision for the incident ticket based on the plurality of routing signals.
18. The non-transitory computer readable storage medium of statement 17, wherein each routing signal of the plurality of routing signals has a corresponding routing decision and a corresponding confidence level, and wherein, to perform the routing decision, the instructions, when executed, further cause the processing device to: identify, from the plurality of routing signals, a highest-priority routing signal having the corresponding confidence level exceeding a threshold; and select, as the routing decision, the corresponding routing decision of the identified highest-priority routing signal.
19. The non-transitory computer readable storage medium of statements 17 or 18, wherein the plurality of user-defined rule sets each correspond to a ticket queue of a plurality of ticket queues, and wherein each ticket queue of the plurality of ticket queues corresponds to a ticket recipient of a plurality of ticket recipients.
20. The non-transitory computer readable storage medium of any combination of one or more of statements 17-19, wherein, to calculate the one or more rule-based signals, the instructions, when executed, further cause the processing device to apply the plurality of user-defined rule sets to information included in the incident ticket.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of automatically routing incident tickets, comprising:
receiving (202) an incident ticket (104) describing an event in a computing system;
calculating (204) a plurality of routing signals (110) for the incident ticket (104), wherein calculating the plurality of routing signals (110) comprises:
calculating (206), based on a plurality of user-defined rule sets (118) applied to the incident ticket (104), one or more rule-based signals (112) of the plurality of routing signals (110);
calculating (208), based on one or more machine learning models (116) sets applied to the incident ticket (104), one or more model-based signals (114) of the plurality of routing signals (110); and
performing (210) a routing decision for the incident ticket (104) based on the plurality of routing signals (110).

2. The method of claim 1, wherein each routing signal of the plurality of routing signals has a corresponding routing decision and a corresponding confidence level, and wherein performing the routing decision comprises:
identifying, from the plurality of routing signals, a highest-priority routing signal having the corresponding confidence level exceeding a threshold; and
selecting, as the routing decision, the corresponding routing decision of the identified highest-priority routing signal.

3. The method of claim 1, wherein the plurality of user-defined rule sets each correspond to a ticket queue of a plurality of ticket queues, and wherein each ticket queue of the plurality of ticket queues corresponds to a ticket recipient of a plurality of ticket recipients.

4. The method of claim 1, wherein calculating the one or more rule-based signals comprises applying the plurality of user-defined rule sets to information included in the incident ticket.

5. The method of claim 1, wherein calculating the one or more rule-based signals comprises:
querying log data generated by one or more computing devices of the computing system associated with the event; and
applying the plurality of user-defined rule sets to the log data.

6. The method of claim 1, wherein calculating the one or more model-based signals comprises identifying, from a plurality of historical incident tickets, one or more similar tickets similar to the incident ticket.

7. The method of claim 6, wherein calculating the one or more model-based signals comprises calculating, based on the one or more similar tickets, a likelihood that the incident ticket can be automatically resolved.

8. The method of claim 6, wherein calculating the one or more model-based signals comprises:
determining, for each ticket recipient of a plurality of ticket recipients, a number of resolved tickets from the one or more similar tickets resolved by a corresponding ticket recipient; and
identifying, from the plurality of ticket recipients, a particular ticket recipient having a highest number of resolved tickets.

9. An apparatus (900) for automatically routing incident tickets, comprising:
a memory (914); and
one or more processing devices (904), operatively coupled to the memory (914), the one or more processing devices (904) configured to:
receive (202) an incident ticket (104) describing an event in a computing system;
calculate (204) a plurality of routing signals (110) for the incident ticket (104), wherein, to calculate the plurality of routing signals (110), the one or more processing devices are further configured to:
calculate (206), based on a plurality of user-defined rule sets (118) applied to the incident ticket (104), one or more rule-based signals (112) of the plurality of routing signals (110);
calculate (208), based on one or more machine learning models (116) sets applied to the incident ticket (104), one or more model-based signals (114) of the plurality of routing signals (110); and
perform (210) a routing decision for the incident ticket (104) based on the plurality of routing signals (110).

10. The apparatus of claim 9, wherein each routing signal of the plurality of routing signals has a corresponding routing decision and a corresponding confidence level, and wherein, to perform the routing decision, the one or more processing devices are further configured to:
identify, from the plurality of routing signals, a highest-priority routing signal having the corresponding confidence level exceeding a threshold; and
select, as the routing decision, the corresponding routing decision of the identified highest-priority routing signal.

11. The apparatus of claim 9, wherein the plurality of user-defined rule sets each correspond to a ticket queue of a plurality of ticket queues, and wherein each ticket queue of the plurality of ticket queues corresponds to a ticket recipient of a plurality of ticket recipients.

12. The apparatus of claim 9, wherein, to calculate the one or more rule-based signals, the one or more processing devices are further configured to perform one or more of the following:
(i) apply the plurality of user-defined rule sets to information included in the incident ticket;
(ii) query log data generated by one or more computing devices of the computing system associated with the event; and
apply the plurality of user-defined rule sets to the log data.

13. The apparatus of claim 9, wherein, to calculate the one or more model-based signals, the one or more processing devices are further configured to identify, from a plurality of historical incident tickets, one or more similar tickets similar to the incident ticket.

14. The apparatus of claim 13, wherein, to calculate the one or more model-based signals, the one or more processing devices are further configured to perform one or more of the following:
(i) calculate, based on the one or more similar tickets, a likelihood that the incident ticket can be automatically resolved;
(ii) determine, for each ticket recipient of a plurality of ticket recipients, a number of resolved tickets from the one or more similar tickets resolved by a corresponding ticket recipient; and
identify, from the plurality of ticket recipients, a particular ticket recipient having a highest number of resolved tickets.

15. A non-transitory computer readable storage medium storing instructions which, when executed, cause a processing device to perform the method according to any of claims 1-8.
